# EUROPEAN PATENT APPLICATION

(11) **EP 4 782 282 A1**
(43) Date of publication of application: **29.07.2026**
(21) Application number: 24867939.1
(22) Date of filing: 05.08.2024
(51) Int. Cl.: B60R 21/207

(54) **VEHICLE OCCUPANT RESTRAINT DEVICE**

(30) Priority: 20.09.2023 JP 2023151948
(71) Applicant: AUTOLIV DEVELOPMENT AB, 44783 Vargarda (JP)
(72) Inventor: KOBAYASHI, Yuto, Yokohama-shi, Kanagawa 222-8580 (JP); SAKURAI, Tsutomu, Yokohama-shi, Kanagawa 222-8580 (JP)
(74) Representative: Müller Verweyen
(86) International application number: PCT/JP2024/027876
(87) International publication number: WO 2025/062858

(57) **Abstract**

Problem

A vehicle occupant restraint device capable of efficiently maintaining a stowed form of an airbag cushion and enabling smooth expansion and deployment. RESOLUTION MEANS

A side airbag device 100 includes a side frame 110 and an airbag module 112. The airbag module 112 includes an airbag cushion 114 and a cover member 120 that encloses a part of the outer periphery of the airbag cushion 114 in an orthogonal direction L2 to the side frame 110. The side frame 110 has a frame vertical wall part 130 along the side surface of the seatback 104 and a frame protrusion part 132 that protrudes outward in the width direction of the seatback 104. The cover member 120 is arranged in a state of spanning between the frame vertical wall part 130 and the end part 142 of the frame protrusion part 132 in the vehicle width direction in the A-A cross section of the side frame 110 in the orthogonal direction L2.

## Description

### TECHNICAL FIELD

The present invention relates to a vehicle occupant restraint device for restraining a vehicle occupant in an emergency.

### BACKGROUND ART

In recent years, airbag devices for restraining occupants have become standard equipment in most vehicles. An airbag device is a safety device which is operated in the event of an emergency such as a vehicle collision, retaining and protecting occupants utilizing an airbag cushion which expands and deploys based on gas pressure.

There are various types of airbag devices depending on the installation site and application. For example, FIG. 1 of Patent Document 1 discloses a side airbag device installed on the side of a seat 1. In the technology of Patent Document 1, an airbag module 11 is stowed in a resin module case 12 and attached to the outside of a side frame 2F.

### RELATED ART DOCUMENTS

### PATENT DOCUMENTS

Patent Document 1: JP 2015-58884A

### SUMMARY OF THE INVENTION

In recent years, there has been a trend toward an increase in the number of performance requirements and items required for automobile crash safety performance evaluation. To meet these requirements, the airbag cushion will inevitably become larger. In addition, with the trend toward autonomous driving in automobiles, new seat frame shapes are also being developed. Due to the increased size of the airbag cushion and the new seat frame shapes, ensuring storage space for the side airbag device is becoming more difficult.

In particular, the novel seat frame shape described above may be detrimental to achieving smooth expansion and deployment of the airbag cushion. To further improve the performance of side airbag devices, ensuring efficient storage and smooth expansion and deployment is necessary.

In light of this manner of problems, an object of the present invention is to provide a vehicle occupant restraint device capable of efficiently maintaining a stowed form of an airbag cushion and enabling smooth expansion and deployment.

### MEANS FOR SOLVING THE PROBLEM

To resolve the problem described above, a typical configuration of a vehicle occupant restraint device according to the present invention includes: a side frame that is built into a seatback of a vehicle seat and extends along a side part of the seat back; and
an airbag module that is attached to the side frame on a width-direction outer side of the seat back, wherein
the airbag module includes:
   an airbag cushion in a prescribed stowed form in which the airbag cushion is rolled or folded; and
   a cover member that wraps at least a part of an outer periphery of the airbag cushion in the stowed form in a direction orthogonal to a longitudinal direction of the side frame;
   the side frame includes:
      a frame vertical wall part along a side surface of the seat back; and
      a frame protrusion part that is provided at a front side of the seat back in the frame vertical wall part and protrudes outward in a width direction of the seat back beyond the frame vertical wall part, and
      the cover member is arranged, in a cross section of the side frame taken in the orthogonal direction, in a state of spanning between the frame vertical wall part and a width-direction outer end part of the frame protrusion part.

The cover member described above enables the airbag cushion to be efficiently stowed in the limited space within the seatback, compared to a resin case or the like. In addition, according to the configuration described above, the cover member covers the space at the interior angle between the frame vertical wall part of the side frame and the frame protrusion part, thereby preventing the airbag cushion from entering the interior angle during deployment, and enabling the airbag cushion to expand and deploy smoothly and quickly toward the front of the seatback.

The cover member may extend linearly from the frame vertical wall part toward the outer end part of the frame protrusion part in the width direction.

The cover member having the configuration described above also prevents the airbag cushion from getting caught in the interior angle of the side frame during deployment, enabling the airbag cushion to expand and deploy smoothly.

The cover member described above may include:
a rear-side abutting part that is in contact with the frame vertical wall part along the frame vertical wall part;
an inclined part that extends from the rear-side abutting part toward the width-direction outer end part of the frame protrusion part; and
a front-side abutting part that extends toward a front side of the seatback while in contact with the end part of the frame protrusion part.

The cover member having the configuration described above also enables efficient storing of the airbag cushion in the limited space within the seatback, while preventing the airbag cushion from getting caught in the interior angle of the side frame during deployment.

The cover member described above covers the interior angle formed by the frame vertical wall part and the frame protrusion part in a cross section of the side frame taken in the orthogonal direction so as to form a prescribed space in the interior angle.

The cover member having the configuration described above also prevents the airbag cushion from getting caught in the interior angle of the side frame during deployment, enabling the airbag cushion to expand and deploy smoothly.

The cover member described above may have at least a hard portion formed by compressing a plurality of polymer fibers.

For example, by using the hard portion of the configuration described above to cover the interior angle of the side frame, the airbag cushion can be efficiently prevented from getting into the interior angle of the side frame during deployment, and the airbag cushion is able to expand and deploy smoothly.

The airbag module may be for a side airbag. With the configuration described above, a side airbag device that can efficiently stow the airbag cushion can be achieved.

### EFFECT OF THE INVENTION

The present invention can provide a vehicle occupant restraint device that is capable of efficiently maintaining a stowed form of the airbag cushion and enabling smooth expansion and deployment.

### BRIEF DESCRIPTION OF THE DRAWINGS

FIG. 1 is a diagram depicting an outline of a vehicle side airbag device according to an embodiment of the present invention;
FIG. 2 is a diagram depicting the side airbag device of FIG. 1 as seen from an inner side in a width direction of the seatback;
FIG. 3 is a view depicting the airbag module of FIG. 2(a) in isolation;
FIG. 4 is a diagram depicting a process in which the side airbag device of FIG. 2(a) activates; and
FIG. 5 is a diagram depicting a modified example of the cover member in FIG. 4.

### EMBODIMENTS OF THE INVENTION

Preferred embodiments according to the present invention will hereinafter be described in detail with reference to the attached drawings. Dimensions, materials, other specific numerical values, and the like indicated in the embodiments are merely examples for ease of understanding the invention and do not limit the present invention unless otherwise noted. Note that in the present specification and drawings, elements having essentially identical functions and configurations are labeled with identical symbols in order to omit redundant descriptions, and illustrations of elements not directly related to the present invention are omitted.

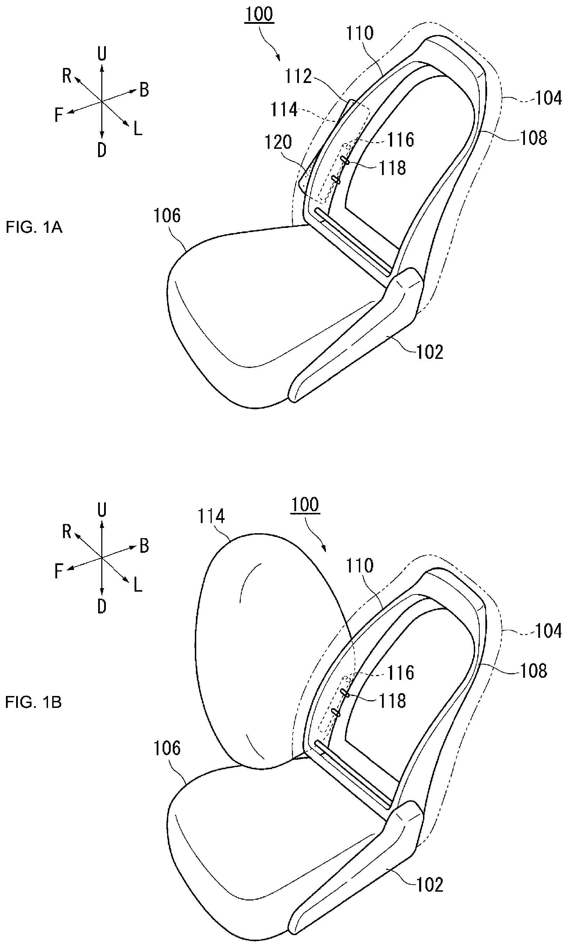

FIG. 1 is a diagram depicting an outline of a vehicle occupant restraint device (hereinafter referred to as side airbag device 100) according to an embodiment of the present invention. FIG. 1(a) is a diagram depicting the state of the side airbag device 100 before activation.

Regarding the present embodiment, when the occupant is seated in the seat 102 in a normal posture, the direction the occupant faces is referred to as front, and the opposite direction is referred to as back. In addition, when the occupant is seated in the seat 102 in a normal posture, the right of the occupant is referred to as the right direction, and the left of the occupant is referred to as the left direction. Furthermore, when the occupant is seated in a normal posture, the direction towards the head of the occupant is referred to as up, and the direction towards the legs of the occupant is referred to as down. In the drawings used in the following description, as necessary, the front, back, left, right, up and down directions relative to the occupant are indicated by arrows F (Forward), B (Back), L (Left), R (Right), U (Up), and D (Down), respectively.

Generally, a seat in a vehicle may be capable of rotating in any direction. Therefore, the directions relative to the occupant seated in the seat 102 may differ from the directions relative to the vehicle. In addition, the side airbag device 100 can be installed in any seat of the front row, back row, or even on either the left or right side of the vehicle.

The seat 102 has a seatback 104 that supports the back of the occupant, and a seat cushion 106 that supports the buttocks of the occupant. In FIG. 1(a), the seatback 104 is depicted with a seat frame 108 and the like inside the seatback visible therethrough, and the outer surface is indicated by a broken line.

The seat frame 108 is a skeletal structure member equipped in the seatback 104. The seat frame 108 is surrounded by a seat pad filled with urethane material or the like. A side frame 110 is a part of the seat frame 108 that extends along the side of the seatback 104. The side airbag device 100 is attached to a side frame 110 and is used in a state of being built into the seatback 104.

FIG. 1(b) depicts the side airbag device 100 of FIG. 1(a) after activation. The side airbag device 100 expands and deploys an airbag cushion 114 in an emergency such as when an impact occurs to the vehicle, thereby restraining the occupant seated on the seat 102 from a side.

The airbag cushion 114 is a bag-shaped member for capturing an occupant and is formed by overlapping, stitching, or adhering a plurality of base materials included on the surface thereof or weaving using OPW (one piece woven).

An inflator 116 is a gas generating device that operates upon receiving an activation signal transmitted from the vehicle side when an impact occurs, and supplies gas to the inside of the airbag cushion 114. In the present embodiment, the inflator 116 used is a cylinder type.

The inflator 116 is housed inside the airbag cushion 114 on the back side. The inflator 116 has a plurality of stud bolts 118 and is secured by fastening the stud bolts 118 to the side frame 110.

Examples of currently prevailing inflators include: types which are filled with a gas-generating agent and burn the agent to generate gas; types which are filled with compressed gas and supply gas without generating heat; and hybrid types which utilize both combustion gas and compressed gas. Any of these types can be used for the inflator 116.

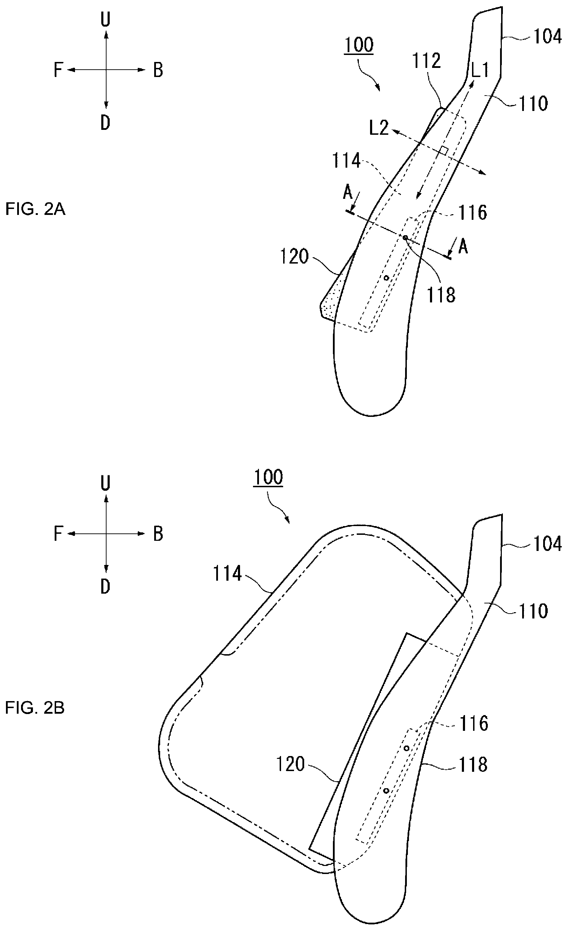

FIG. 2 is a diagram depicting the side airbag device 100 of FIG. 1 as seen from an inner side in a width direction of the seatback 104. FIG. 2(a) is a diagram depicting the side airbag device 100 of FIG. 1(a) as seen from an inner side in a width direction of the seatback 104.

Before activation, the airbag cushion 114 is formed into a stowed form in which the airbag cushion is rolled or folded in a state in which an inflator 116 is inserted, wrapped on an outer periphery thereof by a cover member 120, and unitized as an airbag module 112. The airbag module 112 is attached to the side frame 110 on the outer side in the width direction of the seatback 104.

In the present embodiment, the airbag module 112 is mounted to the side frame 110 on the right side of the seatback 104 in the width direction, but may also be mounted to the side frame on the left side in the width direction. In other words, the airbag module 112 can be installed either on a side part on a door side (near side) of the seat 102 that is closer to a collision point, or on a side part on a vehicle inner side (far side) that is farther from the collision point.

FIG. 2(b) is a diagram depicting the side airbag device 100 of FIG. 1(b) as seen from an inner side in a width direction of the seatback 104. When the airbag cushion 114 receives gas from the inflator 116, the inflation pressure cleaves open the cover member 120, and expands and deploys forward from the side frame 110.

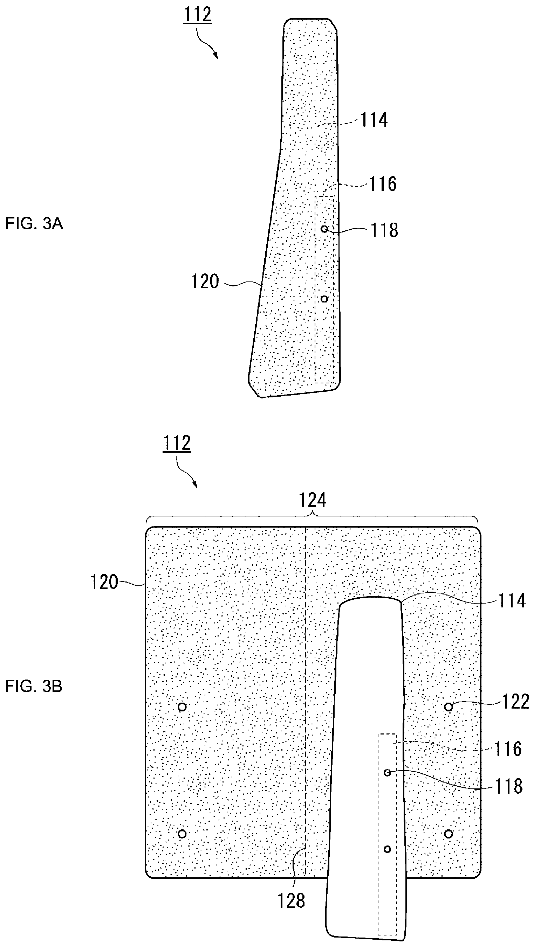

FIG. 3 is a diagram depicting the airbag module 112 of FIG. 2(a) in isolation. FIG. 3(a) is a diagram depicting the airbag module 112 of FIG. 2(a) before activation.

As described above, the airbag module 112 has the airbag cushion 114 in a stowed form enclosed by the cover member 120. The cover member 120 includes a ductile fabric material containing a plurality of polymer fibers, covers the outer periphery of the airbag cushion 114 in stowed form, breaks from expansion pressure of the airbag cushion 114, and releases the airbag cushion 114.

The cover member 120 may be configured to enclose the entire outer periphery of the airbag cushion 114 in the stowed form, or may be configured to enclose only a part of the outer periphery of the airbag cushion 114 in the stowed form. In other words, the cover member 120 only needs to have a configuration capable of retaining the rolling or folding of the airbag cushion 114.

The cover member 120 is in a state where the stud bolts 118 of the inflator 116 pass through from the inside to the outside. In order to maintain a state in which the cover member 120 wraps the airbag cushion 114, the cover member may be hooked onto and fastened to the stud bolt 118, or the cover member may be fastened using a breakable tape or the like.

FIG. 3(b) is a diagram depicting a state in which the cover member 120 of FIG. 3(a) is open. FIG. 3(b) depicts a state in which the cover member 120 is spread out flat. The cover member 120 is provided with bolt holes 122 at each location for passing the stud bolts 118 of the inflator 116 therethrough.

As described above, the cover member 120 is formed of a ductile fabric material containing a plurality of polymer fibers, and is implemented in the present embodiment as a felt-like non-woven fabric. Examples of the polymer fiber include polyester fiber.

The polymer fiber described above may be a mono-component fiber or may be a bicomponent composite fiber having a different core and coating. Bicomponent composite fibers are suitable when melting the fibers together if a melting point of the coating is set lower than a melting point of the core. In addition, the ductile fabric material may also be formed to contain a plurality of different types of polymer fibers.

In the present embodiment, a hard portion 124 is formed in a part or all of the cover member 120, enabling a form in a state enclosing the airbag cushion 114 to be maintained. The hard portion 124 is made hard and difficult to bend by compressing a plurality of polymer fibers by pressing with prescribed equipment.

The hard portion 124 is formed by compressing and fusing the plurality of polymer fibers in the cover member 120. The press processing is carried out, for example, on bicomponent composite fiber contained in the cover member 120 at a temperature higher than the melting point of the coating but lower than melting point of the core. This operation causes the bicomponent composite fibers to fuse with other fibers.

The hard portion 124 described above has a higher bending rigidity (second moment of area x Young's modulus) than other regions. On the other hand, the area that has not been subjected to the press working can be used as a flexible portion that maintains the original softness thereof and bends easily. In the soft portion, the plurality of polymer fibers are in a non-melted state, or at least in a state where the ratio of melting is lower than that of the hard portion 124.

The cover member 120 is provided with a weakened part 128. The weakened part 128 is a part that becomes the starting point for tearing when the airbag cushion 114 is expanded and deployed. The weakened part 128 can be achieved as, for example, a breaking line-shaped slit or the like formed transverse to the cover member 120.

By providing the cover member 120 with the weakened part 128, the cover member can be smoothly torn apart by the expansion pressure of the airbag cushion 114, thereby releasing the airbag cushion 114. Note that in addition to the breaking line-shaped slit, the weakened part 128 can also be achieved as a configuration of breaking lines arranged in an incision shape or an arrangement of small notches (through holes).

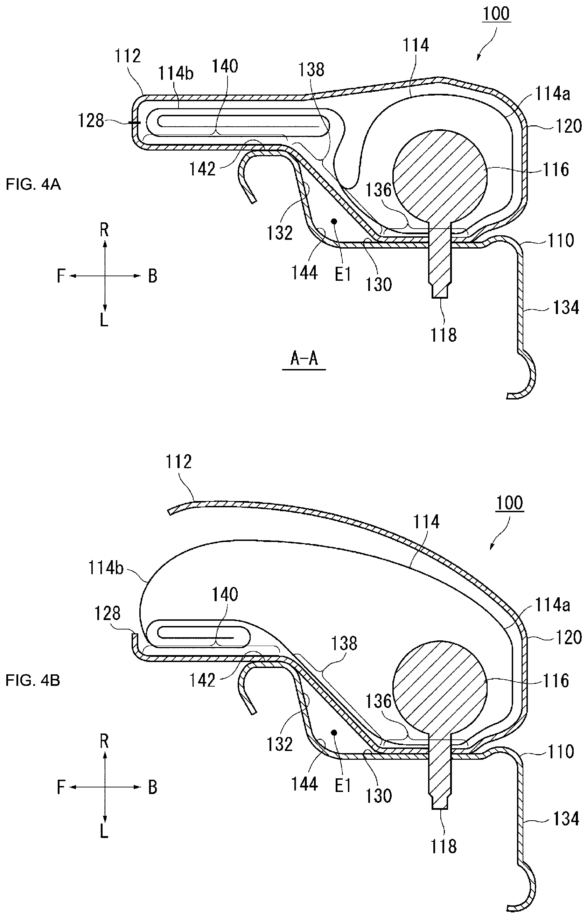

FIG. 4 is a diagram depicting a process in which the side airbag device 100 of FIG. 2(a) activates. FIG. 4(a) is a cross-sectional view of the side airbag device 100 along A-A in FIG. 2(a). The cross section along A-A is in an orthogonal direction L2 to a longitudinal direction L1 of the side frame 110 illustrated in FIG. 2(a).

The airbag module 112 is attached to the side frame 110 on the outer side in the width direction of the seatback 104 using stud bolts 118. The airbag cushion 114 in a stowed form has a cushion rear part 114a enclosing the inflator 116 and a cushion front part 114b that is folded or the like.

The side frame 110 has a cross section that is curved in an orthogonal direction L2 (see FIG. 2(a)). More specifically, the side frame 110 is formed with a frame vertical wall part 130 and a frame protrusion part 132.

The frame vertical wall part 130 is a flat portion that extends along the side surface of the seatback 104 (see FIG. 1(a)). A frame rear wall part 134 extends from the rear side of the frame vertical wall part 130 while bending toward the inside in the width direction of the seatback 104.

The frame protrusion part 132 is a portion of the frame vertical wall part 130 provided on the front side of the seatback 104, and protrudes outward in the width direction of the seatback 104 beyond the frame vertical wall part 130.

The cover member 120 is in a state of wrapping at least a part of an outer periphery of the airbag cushion 114 in the stowed form in the orthogonal direction L2 depicted in FIG. 2(a).

The hard portion 124 described above is provided over the entirety of the cover member 120. In particular, the hard portion 124 is formed with a rear-side abutting part 136, an inclined part 138, and a front-side abutting part 140 in accordance with the cross-sectional shape of the side frame 110.

The rear-side abutting part 136 is a portion that makes contact along the frame vertical wall part 130, and is formed on a side of the cushion rear part 114a facing the side frame 110. The rear-side abutting part 136 is formed flat so as to easily contact the frame vertical wall part 130.

The inclined part 138 is a portion that extends obliquely from the front side of the rear-side abutting part 136, and is formed on the side frame 110 side from the cushion rear part 114a to the cushion front part 114b. The inclined part 138 extends obliquely and linearly from the rear-side abutting part 136 toward an end part 142 on the outer side in the width direction of the frame protrusion part 132.

The front-side abutting part 140 is a portion that contacts the end part 142 of the frame protrusion part 132, and is formed on the side frame 110 side of the cushion front part 114b. A front-side abutting part 140 extends from the inclined part 138 to the front of the seatback 104 to contact the end part 142.

FIG. 4(b) is a diagram depicting a state when the side airbag device 100 of FIG. 4(a) starts to activate.

When a vehicle sensor detects an impact, gas is supplied from the inflator 116. At this time, the cover member 120 is provided so that the weakened part 128 is positioned, for example, on the front side of the seatback 104 or on the outer side in the vehicle width direction. The weakened part 128 is then cleaved by the expansion pressure of the airbag cushion 114, and the cover member 120 releases the airbag cushion 114.

Upon starting to expand and deploy, the airbag cushion 114 expands and deploys forward from the seatback 104. However, the side frame 110 of the seatback 104 may have irregularities formed thereon due to the frame protrusion part 132 and the like. Therefore, in the present embodiment, the cover member 120 is provided with an inclined part 138 as the hard portion 124, and the inclined part 138 covers the irregularities of the side frame 110.

The inclined part 138 is arranged so as to cover an interior angle 144 between the frame vertical wall part 130 and the frame protrusion part 132 in the A-A cross section of the side frame 110 in the orthogonal direction L2 (see FIG. 2(a)), forming a space E1. Therefore, when viewed from the cushion rear part 114a, a guide is formed by the inclined part 138 from the frame vertical wall part 130 toward the end part 142 of the frame protrusion part 132.

The inclined part 138 is arranged in a straight line between the frame vertical wall part 130 and the end part 142 of the frame protrusion part 132. The inclined part 138 partitions the area near the interior angle 144 into a triangular shaped space E1, so that the airbag cushion 114 does not enter the space E1 during deployment.

According to the present embodiment, the hard portion 124 of the cover member 120 forms the inclined part 138 and the inclined part 138 covers the space E1 of the interior angle 144 between the frame vertical wall part 130 and the frame protrusion part 132 of the side frame 110, thereby avoiding entrance of the airbag cushion 114 into the interior angle 144 during deployment. In other words, the inclined part 138 prevents the airbag cushion 114 from getting caught on the frame protrusion part 132. This configuration prevents the airbag cushion 114 from interfering with the frame protrusion part 132 during deployment, and enables the airbag cushion 114 to expand and deploy smoothly and quickly toward the front of the seatback 104.

In the present embodiment, the cover member 120 having the hard portion 124 enables the airbag cushion 114 to be kept in a smaller stowed form. In particular, if the cover member 120 is formed of polymeric fiber, the shape can be changed to a certain extent compared to a resin case, or the like, so the airbag cushion 114 can be stowed so as to fit the surrounding structure. Therefore, the cover member 120 enables the airbag cushion 114 to be stowed efficiently in the limited space within the seatback 104 (see FIG. 1(a)).

Since the airbag module 112 can prevent disturbance of the rolled state of the airbag cushion 114 by means of the cover member 120, for example, assembling the airbag cushion 114 to a vehicle or the like is facilitated. In addition, following vehicle assembly, the airbag module 112, via the cover member 120, can protect against other structures interfering with the airbag cushion 114, and the rolling or folding of the airbag cushion 114 can be suitably maintained even when vibration or the like is applied during travel.

In the present embodiment, the hard portion 124 is formed in the cover member 120 in advance, prior to enclosing the airbag cushion 114. Therefore, as compared with a case in which some processing is performed on the cover member 120 after the cover member is wrapped on the airbag cushion 114, there is no risk of disturbing the rolled or the like state of the airbag cushion 114, and the influence on equipment such as the inflator 116 is also small, which is preferable.

The weakened part 128 can be provided not only on the front side of the airbag cushion 114 but also at various locations on the cover member 120 as appropriate. In addition, there is no restriction to a number of sheets of the ductile fabric material forming the cover member 120 and, for example, a plurality of a cloth-like ductile fabric material may be stacked and pressed to form the hard portion having higher bending rigidity. This enables increasing the bending rigidity of the cover member 120 to improve the retention performance of the airbag cushion 114, or increasing the bending rigidity of the inclined part 138 to more fully prevent interference of the airbag cushion 114 with the frame protrusion part 132.

The cover member 120 can also be formed by thermal welding the edges of a plurality of end materials formed by the polymer fibers. In this case, the end material edges peel off due to the expansion pressure of the airbag cushion 114, which enables the edges to be used as the weakened part 128. In addition, the cover member 120 is not limited to a non-woven fabric material and may also be formed by a woven fabric material. In other words, the cover member 120 may be a cloth having a material composition or a fiber structure that imparts mobility or elastic behavior to the fibers.

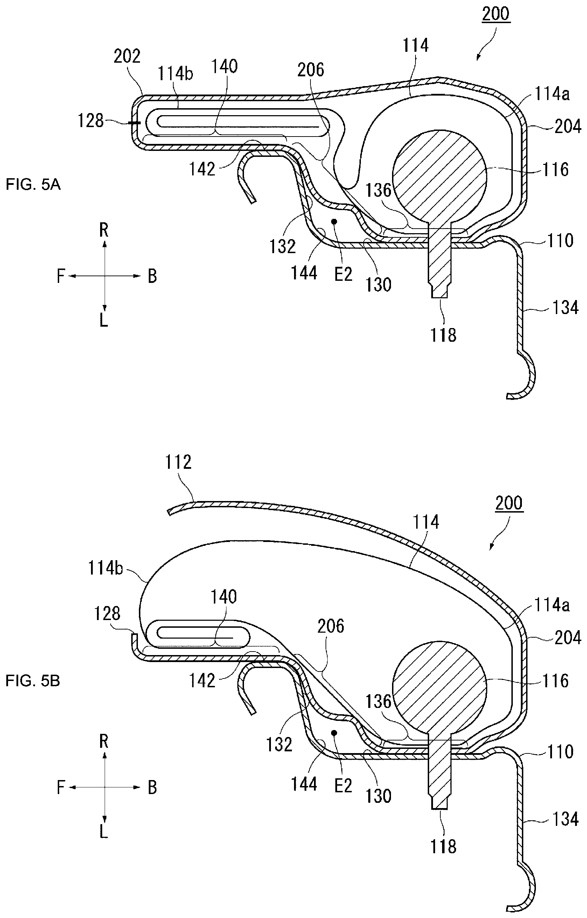

FIG. 5 is a diagram depicting a modified example (cover member 204) of the cover member 120 in FIG. 4. In the description below, the same code will be provided for configuration elements that have already been described and the description thereof is omitted. In addition, configuration elements with the same name as configuration elements already described have the same configuration and function even if a different reference is applied.

FIG. 5(a) is a diagram depicting the cover member 204 according to FIG. 4(a). With the cover member 204, an inclined part 206 is formed in a step-like manner rather than in a straight line.

Similar to the inclined part 138 (see FIG. 4(a)), the inclined part 206 also extends diagonally in a stepped manner from the rear-side abutting part 136 toward the outer end part 142 of the frame protrusion part 132 in the width direction. The inclined part 206 is also arranged so as to cover an interior angle 144 between the frame vertical wall part 130 and the frame protrusion part 132 in the A-A cross section of the side frame 110 in the orthogonal direction L2 (see FIG. 2(a)), forming a space E2.

FIG. 5(b) is a diagram depicting the cover member 204 according to FIG. 4(b). Therefore, when viewed from the cushion rear part 114a, a guide is formed by the inclined part 206 from the frame vertical wall part 130 toward the end part 142 of the frame protrusion part 132.

The inclined part 206 is arranged in a stepped manner between the frame vertical wall part 130 and the end part 142 of the frame protrusion part 132. The inclined part 206 also partitions the area near the interior angle 144 into a space E2, so that the airbag cushion 114 does not enter the space E2 during deployment.

As described above, even if the inclined part 206 is not linear but has unevenness such as a stepped shape, the inclined part can cover the space E2 of the interior angle 144 between the frame vertical wall part 130 and the frame protrusion part 132, thereby preventing the airbag cushion 114 from entering the interior angle 144 during deployment. The cover member 204 also prevents the airbag cushion 114 from interfering with the frame protrusion part 132 during deployment, allowing the airbag cushion 114 to expand and deploy smoothly and quickly toward the front of the seatback 104.

In the present embodiment, the occupant restraint device has been described as being implemented as a side airbag device 100 that restrains an occupant from the side. However, the occupant restraint device according to the present invention can also be implemented as a device other than the side airbag device 100. For example, the occupant restraint device can be implemented as a center airbag arranged in the center of the back row seat.

A center airbag is a device that uses an airbag cushion to prevent rear seat occupants from colliding with each other. In this case, the side frame 110 and the airbag module 112 of FIG. 4(a) are mounted on the center portion of the rear seat. In this example, the side frame 110 and the airbag module 112 enable the airbag cushion 114 to be efficiently stored in the limited space within the rear seat, while enabling the airbag cushion 114 to be smoothly and quickly expanded and deployed toward the front of the seatback of the rear seat.

Preferred examples of the present invention were described above while referring to the attached drawings. However, the embodiments described above are preferred examples of the present invention, and other embodiments can be implemented or performed by various methods. In particular, unless described otherwise in the specification of the present application, the invention is not limited to the shape, size, configurational disposition, and the like of parts depicted in detail in the attached drawings. In addition, expressions and terms used in the specification of the present application are used for providing a description, and the invention is not limited thereto, unless specifically described otherwise.

Therefore, a person of ordinary skill in the art could obviously conceive of various changed examples or modified examples within the scope described in the scope of the claims, which is understood to naturally belong to the technical scope of the present invention.

### INDUSTRIAL APPLICABILITY

The present invention can be used in a vehicle occupant restraint device that restrains a vehicle occupant in an emergency.

### DESCRIPTION OF CODES

100. Side airbag device, 102. Seat, 104. Seatback, 106. Seat cushion, 108. Seat frame, 110. Side frame, 112. Airbag module, 114. Airbag cushion, 114a. Cushion rear part, 114b. Cushion front part, 116. Inflator, 118. Stud bolt, 120. Cover member, 122. Bolt hole, 124. Hard portion, 128. Weakened part, 130. Frame vertical wall part, 132. Frame protrusion part, 134. Frame rear wall part, 136. Rear-side abutting part, 138. Inclined part, 140. Front-side abutting part, 142. End part, 144. Interior angle, E1. Space, L1. Longitudinal direction, L2. Orthogonal direction, 200. Side airbag device, 202. Airbag module, 204. Cover member, 206. Inclined part, E2. Space

## Claims

1. A vehicle occupant restraint device, comprising:
a side frame that is built into a seatback of a vehicle seat and extends along a side part of the seat back; and
an airbag module that is attached to the side frame on a width-direction outer side of the seat back, wherein
the airbag module includes:
an airbag cushion in a prescribed stowed form in which the airbag cushion is rolled or folded; and
a cover member that wraps at least a part of an outer periphery of the airbag cushion in the stowed form in a direction orthogonal to a longitudinal direction of the side frame;
the side frame includes:
a frame vertical wall part along a side surface of the seat back; and
a frame protrusion part that is provided at a front side of the seat back in the frame vertical wall part and protrudes outward in a width direction of the seat back beyond the frame vertical wall part, and
the cover member is arranged, in a cross section of the side frame taken in the orthogonal direction, in a state of spanning between the frame vertical wall part and a width-direction outer end part of the frame protrusion part.

2. The vehicle occupant restraint device according to claim 1, wherein the cover member extends linearly from the frame vertical wall part toward the width-direction outer end part of the frame protrusion part.

3. The vehicle occupant restraint device according to claim 1, wherein
the cover member includes:
a rear-side abutting part that is in contact with the frame vertical wall part along the frame vertical wall part;
an inclined part that extends from the rear-side abutting part toward the width-direction outer end part of the frame protrusion part; and
a front-side abutting part that extends toward a front side of the seatback while in contact with the end part of the frame protrusion part.

4. The vehicle occupant restraint device according to claim 1, wherein the cover member covers the interior angle formed by the frame vertical wall part and the frame protrusion part in a cross section of the side frame taken in the orthogonal direction so as to form a prescribed space in the interior angle.

5. The vehicle occupant restraint device according to any one of claims 1 to 4, wherein the cover member has, at least in a part thereof, a hard portion in which the plurality of polymer fibers are compressed.

6. The vehicle occupant restraint device according to any one of claims 1 to 4, wherein the airbag module is for a side airbag.
